(19) **Europäisches Patentamt**
European Patent Office
Office européen des brevets

(11) **EP 3 664 242 B1**

(12) # EUROPÄISCHE PATENTSCHRIFT

(45) Veröffentlichungstag und Bekanntmachung des Hinweises auf die Patenterteilung:
**26.10.2022 Patentblatt 2022/43**

(21) Anmeldenummer: **18209863.2**

(22) Anmeldetag: **03.12.2018**

(51) Internationale Patentklassifikation (IPC):
**H02J 3/06** $^{(2006.01)}$

(52) Gemeinsame Patentklassifikation (CPC):
**H02J 3/06;** G06Q 50/06; H02J 3/003; Y04S 10/50

(54) **PRÄDIKTIVE BETRIEBSPLANUNG IN EINEM MIKRONETZ MIT LEISTUNGSAUSTAUSCH ZWISCHEN DEM MIKRONETZ UND EINEM HAUPTSTROMNETZ**

PREDICTIVE OPERATION IN A MICRONETWORK WITH POWER EXCHANGE BETWEEN A MICRONETWORK AND A MAIN POWER NETWORK

PLANIFICATION DE FONCTIONNEMENT PRÉDICTIVE DANS UN MICRO-RÉSEAU À ÉCHANGE DE PERFORMANCE ENTRE LE MICRO-RÉSEAU ET UN RÉSEAU ÉLECTRIQUE PRINCIPAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.06.2020 Patentblatt 2020/24**

(73) Patentinhaber: **Siemens Aktiengesellschaft 80333 München (DE)**

(72) Erfinder:
• **Gottschalk, Corinna 81379 München (DE)**
• **Seydenschwanz, Martin 81541 München (DE)**

(56) Entgegenhaltungen:
DE-A1-102015 206 510    US-A1- 2015 039 145
US-A1- 2018 173 171

• **MOSHI GODFREY GLADSON ET AL: "Optimal operational planning for PV-Wind-Diesel-battery microgrid", 2015 IEEE EINDHOVEN POWERTECH, IEEE, 29. Juni 2015 (2015-06-29), Seiten 1-6, XP033215532, DOI: 10.1109/PTC.2015.7232461 [gefunden am 2015-08-31]**
• **BASIR KHAN M REYASUDIN ET AL: "Multi-agent based distributed control architecture for microgrid energy management and optimization", ENERGY CONVERSION AND MANAGEMENT, ELSEVIER SCIENCE PUBLISHERS, OXFORD, GB, Bd. 112, 25. Januar 2016 (2016-01-25), Seiten 288-307, XP029406786, ISSN: 0196-8904, DOI: 10.1016/J.ENCONMAN.2016.01.011**

**Beschreibung**

TECHNISCHES GEBIET

Verschiedene Beispiele der Erfindung betreffen im Allgemeinen die prädiktive Betriebsplanung in einem Mikronetz, wobei das Mikronetz einen Anschluss an ein Hauptstromnetz aufweist. Verschiedene Beispiele der Erfindung betreffen insbesondere die prädiktive Betriebsplanung, so dass diese einen Leistungsaustausch zwischen dem Mikronetz und einem Hauptstromnetz vorsieht.

HINTERGRUND

Mikronetze beschreiben eine lokalisierte Gruppe von Stromquellen und Stromverbrauchern. Mikronetze können konventionelle Stromquellen und regenerative Stromquellen umfassen. Das Mikronetz weist im Vergleich zu Hauptstromnetzen typischerweise eine limitierte Ausdehnung auf. Typische Verbraucher in einem Mikronetz sind zum Beispiel: Wohnhäuser; Autobatterien; Industrieanlagen; Maschinen; etc. Typische Stromquellen sind zum Beispiel: Photovoltaikanlagen; Dieselgeneratoren; Windkraftanlagen; etc. Ein Mikronetz kann zum Beispiel in einem Wohnblock, einer Wohngemeinschaft, einer Militärbasis, einer Forschungsstation oder ähnlichem eingesetzt werden. Mikronetze können beispielsweise zur autarken Energieversorgung von Industrieanlagen oder Inseln eingesetzt werden.

Ein Mikronetz kann über einen Anschluss mit einem Hauptstromnetz verbunden sein. Durch das Vorsehen eines Anschlusses des Mikronetzes zum Hauptstromnetz kann ein besonders flexibler Betrieb des Mikronetzes ermöglicht werden. Außerdem kann ein Schutz vor Ausfall durch Zurückgreifen auf die Stromversorgung durch das Hauptstromnetz ermöglicht werden. Der Betrieb des Hauptstromnetzes kann stabilisiert und unterstützt werden.

Ferner ist es bekannt, dass durch die Teilnahme an Regelleistungsmärkten die operativen Kosten für Mikronetze durch die erwirtschaftete Vergütung gesenkt werden können. Diese Regelleistungsmärkte dienen der Stabilisierung des Hauptstromnetzes. Sogenannte Leistungsaustausch-Dienste (engl. balancing service oder ancillary services oder frequency-response service oder reserve service) können verwendet werden, um einen Leistungsaustausch zwischen dem Mikronetz und dem Hauptstromnetz durchzuführen. Dabei kann sich zum Beispiel der Betreiber des Mikronetzes gegenüber dem Betreiber des Hauptstromnetzes verpflichten, in vorher festgelegten Zeiträumen eine gewisse Leistung zur Verfügung zu stellen und/oder eine gewisse Leistung aufzunehmen. Dadurch können im Hauptstromnetz Spitzen im Verbrauch bzw. in der Erzeugung abgefedert werden.

Der Betrieb des Hauptstromnetzes kann unterstützt werden. Relevanter Stand der Technik ist dazu aus der US2018/173171 A, aus der DE 10 2015 2065 10 A1, aus dem Artikel "Optimal operational planning for PV-Wind-Diesel-battery microgrid", Moshi Godfrey Gladson et al., 2015 IEEE EINDHOVEN POWERTECH, IEEE, 29. Juni 2015, aus der US2015/039145 A1, oder aus dem Artikel "Multi-agent based distributed control architecture for microgrid energy management and optimization", Basir Khan M Reyasudin et al., ENERGY CONVERSION AND MANAGEMENT, ELSEVIER SCIENCE PUBLISHERS, OXFORD, GB, Bd. 112, 25. Januar 2016, bekannt.

KURZE BESCHREIBUNG DER ERFINDUNG

Es besteht ein Bedarf, Techniken des Leistungsaustausches zwischen dem Mikronetz und dem Hauptstromnetz in eine prädiktive Betriebsplanung des Mikronetzes zu integrieren.

Diese Aufgabe wird gelöst von den Merkmalen der unabhängigen Patentansprüche. Die Merkmale der abhängigen Patentansprüche definieren Ausführungsformen.

Ein Verfahren zur prädiktiven Betriebsplanung in einem Mikronetz wird beschrieben. Dabei umfasst das Mikronetz einen Anschluss an ein Hauptstromnetz. Das Verfahren umfasst das Durchführen einer zeitdiskreten Optimierung einer Zielfunktion für ein Planungsintervall. Dabei umfasst das Planungsintervall mehrere Zeitintervalle. Die Optimierung wird auch unter Berücksichtigung einer Randbedingung durchgeführt. Die Zielfunktion und/oder die Randbedingung wird in Abhängigkeit von mehreren Zuständen bestimmt. Die Zeitintervalle sind dabei gemäß der mehreren Zustände klassifiziert. Die Zustände sind aus folgender Gruppe ausgewählt: (i) Standby für Leistungsaustausch; (ii) Leistungsaustausch angefragt; sowie (iii) aktiver Leistungsaustausch. Außerdem umfasst das Verfahren das Durchführen der Betriebsplanung basierend auf einem Ergebnis der Optimierung. Dabei sieht die Betriebsplanung einen Leistungsaustausch zwischen dem Mikronetz und dem Hauptstromnetz über den Anschluss vor.

Die Gruppe, aus der die Zustände ausgewählt sind, kann weiterhin umfassen: (iv) Regeneration sowie (v) ausgeschaltet.

Ein Gerät ist zur prädiktiven Betriebsplanung in einem Mikronetz mit Anschluss an ein Hauptstromnetz eingerichtet. Das Gerät ist eingerichtet, um die folgenden Schritte auszuführen: Durchführen einer zeitdiskreten Optimierung einer Zielfunktion für ein Planungsintervall umfassend mehrere Zeitintervalle und unter Berücksichtigung einer Randbedingung, wobei die Zielfunktion und/oder die Randbedingung in Abhängigkeit von mehreren Zuständen, gemäß denen die Zeitintervalle klassifiziert sind, bestimmt ist, wobei die Zustände ausgewählt sind aus folgender Gruppe: (*i*) Standby für Leistungsaustausch, (*ii*) Leistungsaustausch angefragt und (*iii*) aktiver Leistungsaustausch; sowie Durchführen der Betriebsplanung basierend auf einem Ergebnis der Optimierung, wobei die Betriebsplanung einen Leistungsaustausch zwischen den Mikronetz und dem Hauptstromnetz über den Anschluss vorsieht.

Ein Computerprogramm oder ein Computerprogramm-Produkt oder ein computerlesbares Speichermedium umfasst Programmcode. Der Programmcode kann von einem Prozessor geladen werden und ausgeführt werden. Wenn der Programmcode vom Prozessor ausgeführt wird, bewirkt dies, dass der Prozessor ein Verfahren zur prädiktiven Betriebsplanung in einem Mikronetz mit Anschluss an ein Hauptstromnetz ausführt. Dabei umfasst das Verfahren das Durchführen einer zeitdiskreten Optimierung einer Zielfunktion für ein Planungsintervall. Das Planungsintervall umfasst mehrere Zeitintervalle. Das Durchführen der zeitdiskreten Optimierung erfolgt dabei unter Berücksichtigung einer Randbedingung. Die Zielfunktion und/oder die Randbedingung werden in Abhängigkeit von mehreren Zuständen bestimmt. Dabei sind die Zeitintervalle gemäß mehreren Zuständen klassifiziert. Die Zustände sind dabei ausgewählt aus folgender Gruppe: (*i*) Standby für Leistungsaustausch, (*ii*) Leistungsaustausch angefragt, sowie (*iii*) aktiver Leistungsaustausch. Außerdem umfasst das Verfahren auf das Durchführen der Betriebsplanung basierend auf dem Ergebnis der Optimierung. Die Betriebsplanung sieht dabei einen Leistungsaustausch zwischen dem Mikronetz und dem Hauptstromnetz über den Anschluss vor.

KURZE BESCHREIBUNG DER FIGUREN

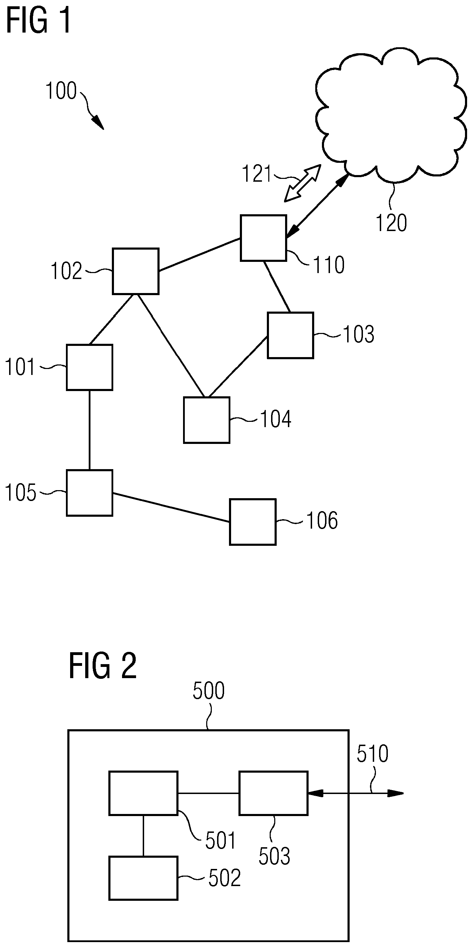

\Fig. 1     illustriert schematisch ein Mikrostromnetz und ein Hauptstromnetz, die gemäß verschiedenen Beispielen über einen Anschluss verbunden sind.

Fig. 2     illustriert schematisch ein Gerät mit einem Prozessor, wobei das Gerät gemäß verschiedener Beispiele zur Betriebsplanung für das Mikrostromnetz basierend auf einem Ergebnis einer Optimierung eingerichtet ist.

Fig. 3     ist ein Flussdiagram eines beispielhaften Verfahrens.

Fig. 4     illustriert schematisch unterschiedliche Zustände von Zeitintervallen, wobei je nach Zustand eine Zielfunktion und/oder eine Randbedingung der Optimierung gemäß verschiedener Beispiele angepasst wird.

Fig. 5     illustriert schematisch eine Randbedingung, die eine Leistungsreserve spezifiziert, gemäß verschiedener Beispiele.

Fig. 6     illustriert schematisch unterschiedliche Zustände von Zeitintervallen, wobei je nach Zustand eine Zielfunktion und/oder eine Randbedingung der Optimierung gemäß verschiedener Beispiele angepasst wird.

Fig. 7     illustriert schematisch eine Randbedingung, die eine Leistungsreserve spezifiziert, gemäß verschiedener Beispiele.

Fig. 8     illustriert schematisch unterschiedliche Zustände von Zeitintervallen, wobei je nach Zustand eine Zielfunktion und/oder eine Randbedingung der Optimierung gemäß verschiedener Beispiele angepasst wird.

DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken im Zusammenhang mit der prädiktiven Betriebsplanung in einem Mikronetz beschrieben. Das bedeutet, dass ein oder mehrere Knoten eines Mikronetzes gemäß einem entsprechenden Betriebsplan gesteuert werden können. Zum Beispiel könnte der Verbrauch, die abgegebene Leistung, die Betriebsfrequenz usw. entsprechend gesteuert werden. Der Betriebsplan könnte alternativ oder zusätzlich auch eine Architektur des Mikronetzes bestimmen, d.h. z.B. eine Verschaltung von Knoten etc. Der Betriebsplan kann ein oder mehrere solche Parameter zeitaufgelöst für ein Planungsintervall festlegen.

Das Mikronetz kann eine Vielzahl von Stromverbrauchern und Stromquellen aufweisen. Beispielsweise könnte das Mikronetz ein oder mehrere der folgenden Knoten aufweisen: Photovoltaikanlage; Batterie-Energiespeichers; Dieselgenerator; Windkraftanlage; elektrisches Gerät wie Maschinen, Heizungen, etc. Das Mikronetz kann insbesondere einen Anschluss zu einem Hauptstromnetz aufweisen. Der Betreiber des Mikronetzes kann verschieden sein von dem Betreiber des Hauptstromnetzes. Für das Betreiben des Mikronetzes und das Betreiben des Hauptstromnetzes können unterschiedliche Planungsinstanzen verwendet werden. Es können unterschiedliche Betriebspläne verwendet werden.

In verschiedenen hierin beschriebenen Techniken kann es möglich sein, eine Betriebsplanung für das Mikronetz basierend auf einem Ergebnis einer Optimierung durchzuführen. Dabei kann die Betriebsplanung einen Leistungsaustausch zwischen dem Mikronetz und dem Hauptstromnetz vorsehen.

Zum Beispiel kann das Durchführen der Betriebsplanung umfassen: Senden und/oder Empfangen von Steuersignalen an und/oder von ein oder mehreren Knoten des Mikronetzes, wobei die Steuersignale den elektrischen Betrieb der Knoten charakterisieren. Zum Beispiel könnte mittels der Steuersignale eine Leistungsaufnahme und/oder eine Leistungsabgabe der verschiedenen Knoten gesteuert werden.

In verschiedenen Beispielen wäre es möglich, dass die Optimierung zeitdiskret durchgeführt wird, d. h. unter Berücksichtigung von einer Anzahl von diskreten Zeitintervallen. Typische Zeitintervalle, die im Rahmen der Optimierung berücksichtigt werden können, können beispielsweise eine Dauer im Bereich von einigen 10 Sekunden bis Minuten aufweisen.

Es ist zum Beispiel möglich, dass die Optimierung prospektiv für das Planungsintervall, beginnend in der Ist-Zeit, durchgeführt wird. Insbesondere wäre es möglich, dass die Optimierung rollierend durchgeführt wird. Dies bedeutet, dass ein Schiebefensteransatz (engl. sliding window) verwendet werden kann, bei welchem die Optimierung in mehreren Iterationen nacheinander wiederholt durchgeführt wird, wobei das jeweilige Planungsintervall zum jeweiligen Ist-Zeitpunkt startet und somit von Iteration zu Iteration in der Zeit nach vorne verschoben wird. Das Planungsintervall kann zum Beispiel eine Anzahl der Zeitintervalle umfassen, beispielsweise 1.000 oder 10.000 oder mehr Zeitintervalle. Typischerweise kann das Planungsintervall eine Länge im Bereich von Stunden oder Tagen aufweisen.

In manchen Beispielen könnte zum Beispiel eine ganzzahlige lineare Optimierung (engl. Mixed integer linear programming optimization, MILP optimization) durchgeführt werden. In anderen Beispielen könnte aber auch eine ganzzahlige quadratische Optimierung durchgeführt werden. Durch das Verwenden einer ganzzahligen Optimierung kann erreicht werden, dass die Optimierung besonders ressourceneffizient und zügig durchgeführt werden kann. Außerdem können zum Beispiel binäre Zustandsvariablen definiert werden, die zum Beispiel den Wert 1 oder den Wert 0 annehmen, je nachdem ob ein bestimmtes Kriterium erfüllt ist oder nicht erfüllt ist.

Durch das Verwenden einer linearen Optimierung kann wiederum eine besonders recheneffiziente und wenig ressourcenintensive Implementierung der Optimierung verwendet werden. Außerdem kann es möglich sein, das Auffinden eines globalen Maximums oder eines globalen Minimums einer Zielfunktion der Optimierung - unter Berücksichtigung von ein oder mehreren Randbedingungen - zu garantieren. Entsprechende Lösungsansätze für ganzzahlige lineare Optimierungen sind im Grundsatz dem Fachmann bekannt und können hier verwendet werden. Ein entsprechendes Beispiel ist zum Beispiel beschrieben in: "Optimal Operational Planning for PV-Wind-Diesel-Battery Microgrid, G. G. Moshi, C. Bovo, and A. Berizzi, IEEE Eindhoven PowerTech, 2015".

In den verschiedenen Beispielen wird im Zusammenhang mit dem Durchführen der Optimierung ein Leistungsaustausch zwischen dem Mikronetz und dem Hauptstromnetz über einen entsprechenden Anschluss berücksichtigt. Der Leistungsaustausch kann bedeuten, dass in ein oder mehreren entsprechenden Zeitintervallen elektrische Energie vom Hauptstromnetz an das Mikronetz transferiert wird (Leistungsaufnahme) und/oder in ein oder mehreren weiteren Zeitintervallen elektrische Leistung vom Mikronetz an das Hauptstromnetz transferiert wird (Leistungsabgabe). Durch die Berücksichtigung eines Leistungsaustausches kann der Betrieb des Hauptstromnetzes und der Betrieb des Mikronetzes stabilisiert werden. Insbesondere können Verbrauchsspitzen oder Produktionsspitzen im Mikronetz und/oder im Hauptstromnetz abgefedert werden. Dadurch kann insbesondere die Fehlfunktion von einzelnen Knoten in den Netzen vermieden werden.

Verschiedene Beispiele beruhen auf der Erkenntnis, dass es im Zusammenhang mit dem Leistungsaustausch häufig eine Vorwarnzeit (engl. response time) gibt. Die Vorwarnzeit bezeichnet dabei einen Zeitraum zwischen dem Empfangen eines Steuersignals, welches indikativ für einen angefragten Leistungsaustausch ist, und dem tatsächlichen Aktivieren des Leistungsaustausches mit Energieübertragung. Weitere Beispiele beruhen auf der Erkenntnis, dass es nach dem Durchführen des Energieaustausches zwischen dem Mikronetz und dem Hauptstromnetz - das heißt nach Beendigung des Leistungsaustausches - eine Regenerationszeit (engl. recovery time) geben kann, welche genutzt werden kann, um das System wieder in einen gewünschten Zustand (stabilisierter Zustand) zu bringen. Vor dem Abschluss der Regenerationszeit kann das erneute Durchführen eines aktiven Leistungsaustausches vermieden werden.

Im Zusammenhang mit den verschiedenen hierin beschriebenen Techniken kann es möglich sein, die Betriebsplanung prädiktiv derart durchzuführen, dass der Leistungsaustausch - z.B. zusätzlich neben anderen Randbedingungen des Betriebs der verschiedenen Knoten des Mikronetzes - berücksichtigt wird. Insbesondere kann es mittels der hierin beschriebenen Techniken möglich sein, den Leistungsaustausch in herkömmliche Algorithmen zur prädiktiven Betriebsplanung unter Verwendung einer Optimierung zu integrieren. Die hierin beschriebenen Techniken ermöglichen es, unterschiedliche Typen von Leistungsaustausch mit einem einheitlichen Satz von Parametern im Zusammenhang mit der Optimierung zu konfigurieren. Insbesondere sind die hierin beschriebenen Techniken nicht auf einzelne Energiespeichereinheiten beschränkt, wie zum Beispiel nur auf Batterien, vergleiche "A MILP model for optimising multi-service portfolios of distributed energy storage, R. Moreno, R. Moreira, G. Strbac, Applied Energy 137, p. 554-566, 2015"

Gemäß verschiedener Beispiele wird dies durch die Klassifizierung der Zeitintervalle der zeitdiskreten Optimierung in jeweils einer von mehreren Systemmodi bzw. Zuständen erreicht. Insbesondere können die Zustände ausgewählt sein aus folgender Gruppe: (*i*) Standby für Leistungsaustausch und (*ii*) Leistungsaustausch angefragt und (*iii*) aktiver Leistungsaustausch. In verschiedenen Beispielen kann also jeweils die Zielfunktion und/oder die Randbedingung der Optimierung in Abhängigkeit von den jeweiligen klassifizierten Zuständen der entsprechenden Zeitintervalle angepasst werden. Dies bedeutet zum Beispiel, dass ein erstes Zeitintervall mit einem ersten Zustand (etwa (*i*) Standby für Leistungsaustausch) eine andere Randbedingung und/oder Zielfunktion aufweist, als ein zweites Intervall (beispielsweise mit Zustand (*ii*) Leistungsaustausch angefragt).

Zum Beispiel werde es in diesem Zusammenhang möglich, dass die Randbedingung in Zeitintervallen mit Zustand (*i*) Standby für Leistungsaustausch den Aufbau einer Leistungsreserve für ein oder mehrere Knoten des Mikronetzes definiert. Dadurch kann ein Reservekonzept implementiert werden, welches abgestimmt ist auf den Leistungsaustausch. Zum Beispiel könnte eine positive Reserve durch Aufbau der Leistungsreserve in ein oder mehreren Energiequellen als Knoten des Mikronetzes vorgesehen werden, d.h. es könnten zum Beispiel Batterien aufgeladen werden oder Dieselstromgeneratoren mit einer gewissen Latenzzeit angefahren werden. Alternativ oder zusätzlich wäre es aber auch möglich, eine negative Leistungsreserve vorzusehen, nämlich im Zusammenhang mit einer oder mehreren Energieverbrauchern des Mikronetzes. D. h. es wäre zum Beispiel möglich, dass der Energieverbrauch von bestimmten Lasten gesenkt wird, so dass der Energieverbrauch kurzfristig auf ein Maximum erhöht werden könnte, sofern im Zusammenhang mit dem Leistungsaustausch notwendig.

In diesem Zusammenhang kann es beispielsweise auch möglich sein, mittels der Randbedingung eine gewisse Untererfüllung oder Übererfüllung des angefragten Leistungsaustausches zu berücksichtigen. Zum Beispiel kann dies dadurch implementiert werden, dass die Randbedingung der Optimierung in Zeitintervallen mit Zustand (*iii*) aktiver Leistungsaustausch einen vorgegebenen Wert für den Leistungsaustausch berücksichtigt, und zusätzlich auch eine positive Toleranz und/oder negative Toleranz für den vorgegebenen Wert berücksichtigt.

Fig. 1 illustriert schematisch ein Mikronetz 100 mit einer Anzahl an Knoten 101-106. Die Knoten 101-106 sind durch Leitungen verbunden, wobei die Anordnung der Knoten im Mikronetz 100 eine Architektur des Mikronetzes 100 bestimmen. Außerdem weist das Mikronetz 100 auch noch einen weiteren Knoten 110 auf, der einen Anschluss des Mikronetzes 100 zu einem Hauptstromnetz 120 modelliert. Über den Anschluss 110 kann ein Leistungsaustausch 121 zwischen dem Mikronetz 100 und dem Hauptstromnetz 120 implementiert werden, d.h. ein elektrischer Energiefluss kann realisiert werden.

Im Rahmen des Durchführens einer Betriebsplanung des Mikronetzes 100 kann der individuelle Betrieb der verschiedenen Knoten 101-106 gesteuert werden. Alternativ oder zusätzlich könnte aber auch die Architektur des Mikronetzes 100 konfiguriert werden.

Fig. 2 illustriert schematisch ein Gerät 500 welches eingesetzt werden kann, um eine Betriebsplanung für den Betrieb eines Mikronetzes - beispielsweise des Mikronetzes 100 aus Fig. 1 - durchzuführen. Das Gerät 500 umfasst einen Prozessor 501. Zum Beispiel könnte der Prozessor als FPGA oder ASIC oder Mikroprozessor oder CPU implementiert sein. Das Gerät 500 umfasst auch einen Speicher 502 beispielsweise einen nicht flüchtigen und/oder einen flüchtigen Speicher. Zum Beispiel könnte der Speicher 502 als RAM Speicher ausgebildet sein. Alternativ oder zusätzlich könnte der Speicher 502 als magnetische Festplatte oder Flash-Speicher ausgebildet sein. Insbesondere kann es möglich sein, dass Programmcode auf dem Speicher 502 gespeichert ist und von dem Prozessor 501 geladen und ausgeführt wird. Der Prozessor 501 kann auch über eine Kommunikationsschnittstelle 503 Steuersignale 510 mit einer oder mehreren der Knoten 101-106, 110 des Mikronetzes 100 austauschen. Dadurch kann der Betrieb der Knoten 101-106, 110 gesteuert werden. Es wäre zum Beispiel auch möglich, dass eine flexible Verschaltung der Verbindungen und Leitungen zwischen den verschiedenen Knoten 101-106, 110 des Mikronetzes 100 über entsprechende Steuersignale 502 gesteuert wird. Wenn der Prozessor 501 den vom Speicher 502 geladenen Programmcode ausführt, kann dies bewirken, dass der Prozessor 501 bestimmte Techniken, wie sie nachfolgend im Detail beschrieben werden, ausführt. Diese Techniken können zum Beispiel umfassen: Durchführen einer Betriebsplanung für ein Mikronetz; Durchführen einer Optimierung, insbesondere einer ganzzahligen linearen Optimierung, unter Berücksichtigung von Randbedingungen; Setzen der Zielfunktion und/oder der Randbedingung der Optimierung unter Berücksichtigung von ein oder mehreren Zustände, gemäß welchen Zeitintervalle der zeitdiskreten Optimierung klassifiziert sein können; etc.

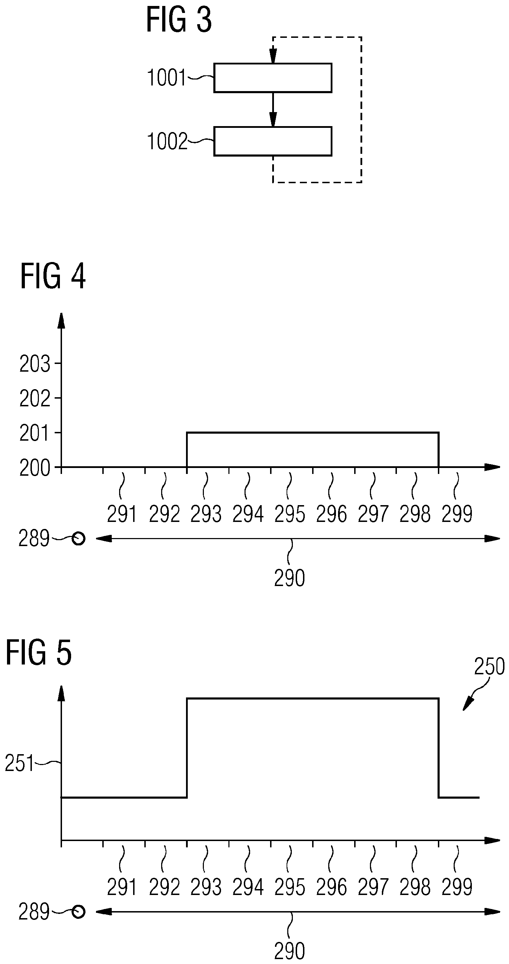

Zum Beispiel ist ein mögliches Verfahren, welches vom Prozessor 501 durch laden des Programmcodes aus dem Speicher 502 ausgeführt werden kann, im Zusammenhang mit dem Flussdiagram in Fig. 3 beschrieben.

Fig. 3 illustriert schematisch ein Verfahren gemäß verschiedener Beispiele. Fig. 3 ist ein Flussdiagram. Zum Beispiel könnte das Verfahren in Fig. 3 von einem Gerät ausgeführt werden, welches einen Prozessor und einen Speicher mit entsprechenden Programmcode beinhaltet (vergleiche Gerät 500 aus Fig. 2). Das Verfahren gemäß Fig. 3 dient der Betriebsplanung eines Mikronetzes, etwa des Mikronetzes 100 aus Fig. 1.

Zunächst wird in Block 1001 eine zeitdiskrete Optimierung einer Zielfunktion für ein Planungsintervall durchgeführt. Insbesondere kann sich das Planungsintervall ausgehend von der Ist-Zeit in die Zukunft erstrecken. Dies bedeutet, dass eine prädiktiver Betriebsplanung im Block 1002 ermöglicht wird, weil bestimmte Steuerparameter der verschiedenen Knoten des Mikronetzes auf Grundlage eines Ergebnisses der Optimierung aus Block 1001 angesteuert werden können und so prädiktive vorhergesagt werden kann, wie sich der Betrieb des Mikronetzes über der Zeit verändert.

In Block 1002 wird die Betriebsplanung durchgeführt. Dabei wird das Ergebnis der Optimierung aus Block 1001 berücksichtigt. Die Betriebsplanung kann z.B. das Bestimmen eines Betriebsplans umfassen.

In verschiedenen Beispielen kann es möglich sein, dass die Optimierung und die Betriebsplanung in den Blöcken 1001 und 1002 rollierend durchgeführt wird, was in Fig. 3 durch die gestrichelte Linie indiziert ist.

Beim Durchführen der Optimierung in Block 1001 kann es insbesondere möglich sein, für verschiedene Zeitintervalle im Planungsintervall unterschiedliche Zustände zu berücksichtigen. Je nach Zustand des jeweiligen Zeitintervalls kann dann die Zielfunktion und/oder die Randbedingung der Optimierungen in Block 1001 angepasst werden. Durch das Berücksichtigen von solchen unterschiedlichen Zuständen kann es besonders effizient und einfach möglich sein, einen Leistungsaustausch zwischen dem Mikronetz 100 und dem Hauptstromnetz 120 zu berücksichtigen. Solche unterschiedlichen Zustände sind insbesondere im Zusammenhang mit der Fig. 4 illustriert.

Fig. 4 illustriert Aspekte im Zusammenhang mit dem Durchführen einer zeitdiskreten Optimierung für ein Planungsintervall 290 welches mehrere Zeitintervalle 291-299 umfasst. Die Optimierung wird dabei zum Zeitpunkt 289 ausgeführt und zwar prospektiv für das darauf folgende Planungsintervall 290.

Insbesondere illustriert Fig. 4 verschiedene Zustände 200-203 in denen die unterschiedlichen Zeitintervalle 291-299 klassifiziert sind. Während im Beispiel der Fig. 4 eine Anzahl von insgesamt vier Zuständen 200-203 dargestellt ist, wäre es in anderen Beispielen möglich, eine größere oder kleinere Anzahl von Zuständen zu verwenden und insbesondere wäre es auch möglich, andere Zustände, als die in Fig. 4 dargestellten, zu verwenden.

In dem Beispiel der Fig. 4 sind die verschiedenen Zustände 200-203 mit dem Leistungsaustausch 121 zwischen dem Mikrostromnetz 100 und dem Hauptstromnetz 120 assoziiert. Insbesondere wird in Abhängigkeit davon, in welchem Zustand 200-203 ein entsprechendes Zeitintervall 291-299 klassifiziert ist, die Zielfunktion und/oder die Randbedingung der Optimierung angepasst. Diese Anpassung erfolgt z.B. hinsichtlich der Vorbereitung, Aktivierung und Deaktivierung des Leistungsaustausches.

Im Beispiel der Fig. 4 sind - als konkretes Beispiel - folgende Zustände 200-203 vorgesehen:
Der Zustand 200 klassifiziert solche Zeitintervalle 291-292, 299 in denen ein Leistungsaustausch 121 mit dem Hauptstromnetz 120 ausgeschlossen ist. Das heißt, hier wird der Leistungsaustausch 121 zum Beispiel unterdrückt. Dieser Ausschluss kann auf a-priori-Wissen basieren. Zum Beispiel könnte der Ausschluss vertraglich zwischen einem Betreiber des Mikronetzes 101 und einem Betreiber des Hauptstromnetzes 120 festgelegt sein. Dies bedeutet, dass in den entsprechenden Zeitintervallen 291-292, 299 mit dem Zustand 200 nicht damit gerechnet werden muss, dass ein Energieaustausch stattfindet.

Der Zustand 201 kann dagegen als (*i*) Standby für Leistungsaustausch bezeichnet werden. Der Zustand 201 kann eine Situation bezeichnen, in der auf Grundlage von a-priori-Wissen ein Leistungsaustausch 121 mit dem Hauptstromnetz 120 grundsätzlich möglich ist, aber nicht notwendigerweise aktiviert werden muss.

Der Zustand 202 bezeichnet wiederum solche Zeitintervalle (in Fig. 4 ist keines der Zeitintervalle 291-299 im Zustand 202 klassifiziert), in welchen das Aktivieren des Leistungsaustausches 121 konkret angefragt wurde, zum Beispiel von einem Betreiberknoten des Hauptstromnetzes120. Der Zustand 202 kann also bezeichnet werden als: (*ii*) Leistungsaustausch angefragt.

Schließlich bezeichnet der Zustand 203 solche Zeitintervalle (in dem Beispiel der Fig. 4 ist keines der Zeitintervalle 291-299 im Zustand 203 klassifiziert), in denen der Leistungsaustausch 121 aktiviert wird, d. h. Energie zwischen dem Mikronetz 100 und dem Hauptstromnetz 120 ausgetauscht wird. Der Zustand 203 kann also bezeichnet werden als: (*iii*) aktiver Leistungsaustausch.

In dem Beispiel der Fig. 4 wurde das Aktivieren des Leistungsaustausches 121 nicht konkret angefragt (z.B. weil der Netzbetreiber des Hauptstromnetzes 120 dafür keinen Bedarf hat). Deshalb gibt es - mit Stand zum Zeitpunkt 289, zu dem die Optimierung durchgeführt wird - keine Zeitintervalle 291-299 die in einem der Zustände 202, 203 klassifiziert wären.

Dies illustriert, dass es a priori unbekannt ist, ob der Leistungsaustausch 121 konkret angefragt wird oder nicht.

Zum Zeitpunkt 298, zu welchem die Optimierung durchgeführt wird (d. h. kurz vor Beginn des Planungsintervalls 290), liegt keine konkrete Anfrage für das Aktivieren des Leistungsaustausches 121 vor. Es könnte aber sein, dass zu einem Zeitpunkt innerhalb des Planungsintervalls 290 eine entsprechende Anfrage empfangen wird, so dass kurzfristig eine Umklassifizierung von einzelnen der Zeitintervalle 293-298 durchgeführt wird.

Um auf eine solche - im Vergleich zur Zeitdauer des Planungsintervalls 290 - kurzfristige Anfrage für das Aktivieren des Leistungsaustausches 121 reagieren zu können, wird ein Reservekonzept implementiert. Insbesondere wird dies dadurch erreicht, dass die Randbedingung der zeitdiskreten Optimierung in den Zeitintervallen 293-298 mit Zustand 201 den Aufbau bzw. das Vorhalten einer Leistungsreserve vorsieht. Entsprechende Techniken sind im Zusammenhang mit Fig. 5 beschrieben. Fig. 5 illustriert Aspekte im Zusammenhang mit der Randbedingung 250 der zeitdiskreten Optimierung. Insbesondere korreliert Fig. 5 mit Fig. 4. Fig. 5 illustriert die Wahl der Randbedingung 250, so dass eine Leistungsreserve 251 in den Zeitintervallen 293-298 mit dem Zustand 201 (vergleiche Fig. 3) definiert wird.

Fig. 5 illustriert insbesondere die Größe der Leistungsreserve 251 als Funktion der Zeit bzw. als Funktion der Zeitintervalle 291-299. Aus Fig. 5 ist ersichtlich, dass die Randbedingung 250 der zeitdiskreten Optimierung so gewählt wird, dass die Leistungsreserve 251 während der Zeitintervalle 293-298 mit dem Zustand 201 einen größeren Wert annimmt, als die Leistungsreserve 251 in den Zeitintervallen 291, 292, 299 mit dem Zustand 200.

Dabei kann im Beispiel der Fig. 5 die Leistungsreserve 251 sowohl positiv definiert sein oder auch negativ definiert sein. Dies bedeutet, dass im Rahmen der Betriebsplanung des Mikronetzes 100 Energiequellen und/oder Energieverbraucher zum Vorsehen einer positiven Leistungsreserve bzw. einer negativen Leistungsreserve angesteuert werden können.

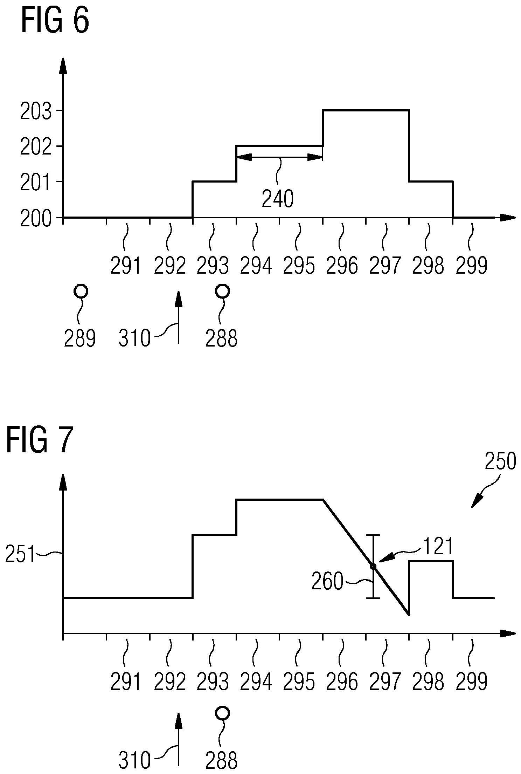

Fig. 6 illustriert Aspekte im Zusammenhang mit der zeitdiskreten Optimierung. Insbesondere illustriert Fig. 6 Aspekte im Zusammenhang mit den Zuständen 200-203. Fig. 6 ist insbesondere mit Figs. 4 und 5 assoziiert. Fig. 6 entspricht dem erneuten Durchführen der zeitdiskreten Optimierung in Reaktion auf das Empfangen eines Steuersignals 310, beispielsweise von einem Steuerknoten des Hauptstromnetzes 120. Die Optimierung wird erneut durchgeführt zum späteren Zeitpunkt 288.

Das Steuersignal 310 ist indikativ für den angefragten Leistungsaustausch 121. Dies bedeutet, dass der Leistungsaustausch 121 konkret aktiviert werden soll. Dies erfordert eine Anpassung der Betriebsplanung des Mikrostromnetzes 100, weswegen ein erneutes Durchführen der Optimierung in Abhängigkeit von den Steuersignalen 310 ausgelöst wird.

Im Zusammenhang mit dem Durchführen der Optimierung zum Zeitpunkt 288 erfolgt insbesondere ein Umklassifizieren der Zeitintervalle 294, 295 vom Zustand 201 (vergleiche Fig. 4) in den Zustand 202. Der Zustand 202 entspricht (ii) Leistungsaustausch angefragt, wie obenstehend schon beschrieben. Außerdem werden in dem Beispiel der Fig. 6 auch die Zeitintervalle 296, 297 vom Zustand 201 (vergleiche Fig. 4) in den Zustand 203 umklassifiziert. Der Zustand 203 entspricht (iii) aktiver Leistungsaustausch, d. h. hier erfolgt ein tatsächlicher Austausch von Energie zwischen dem Mikronetz 100 und dem Hauptstromnetz 120. Die umklassifizierten Zeitintervalle 294-297 sind in Fig. 6 durch die Schraffierung hervorgehoben.

Dieses Umklassifizieren kann bedeuten, dass die Zielfunktion und/oder die Randbedingung der Optimierung in den entsprechenden Zeitintervallen 294-297 verändert wird. Dies ist zum Beispiel im Zusammenhang mit der Fig. 7 dargestellt. Fig. 7 illustriert Aspekte im Zusammenhang mit der Randbedingung 250 der zeitdiskreten Optimierung. Insbesondere illustriert Fig. 7 eine Leistungsreserve 251 in den ein oder mehreren Knoten 101-106 des Mikronetzes 100 vorgehalten wird. Dabei korreliert Fig. 7 mit Fig. 6. Insbesondere ist in dem Beispiel der Fig. 7 ersichtlich, dass die Randbedingung 250 eine weitere Erhöhung der Leistungsreserven 251 während den Zeitintervallen 294, 295 mit Zustand 202 umsetzt (dazu kann eine Zeitdauer 240 für den Zustand 202 entsprechend vorgegeben sein), so dass anschließend in den Zeitintervallen 296, 297 mit Zustand 203 der Leistungsaustausch 121 diese Leistungsreserven 251 abbauen kann. Dies bedeutet, dass die Randbedingung 250 in den Zeitintervallen 296, 297 den Abbau der Leistungsreserve 251 für das Durchführen des Leistungsaustausches 121 ermöglicht. Aus einem Vergleich der Fig. 5 mit Fig. 7 ist ersichtlich, dass die Randbedingung 250 vom Zustand 201-203 der Zeitintervalle 294-297 abhängt.

Durch das Berücksichtigen der Zeitdauer 240 kann erreicht werden, dass eine ausreichende Vorbereitung auf die Aktivierung des Leistungsaustausches 121 erzielt werden kann, d.h. z.B. eine genügend große Leistungsreserve aufgebaut wird.

Aus den Figs. 6 und 7 ist also ersichtlich, dass die Zeitintervalle 294-295 mit Zustand 202 folgen auf die Zeitintervalle 292-293 mit Zustand 201; und die Zeitintervalle 296-297 mit Zustand 203 wiederum folgen auf die Zeitintervalle 294-295 mit Zustand 202. Dies bedeutet das ein graduelles Vorbereiten auf die Aktivierung des Leistungsaustausches 121 in den Zeitintervallen 296-297 mit dem Zustand 203 erfolgen kann, insbesondere auch, wenn der konkrete Zeitpunkt der Aktivierung des Leistungsaustausches 121 a priori, d. h. beim ersten Durchführen der Optimierung zum Zeitpunkt 289 noch nicht bekannt ist.

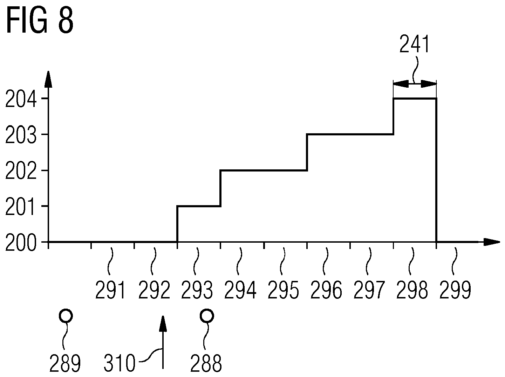

Wie bereits voranstehend erwähnt, wäre es möglich, dass zum Beispiel zusätzlich oder alternativ zu den Zuständen 200-203 (vergleiche Fig. 4 und Fig. 6) weitere oder andere Zustände berücksichtigt werden. Ein sprechendes Beispiel ist in Fig. 8 dargestellt.

Fig. 8 illustriert Aspekte im Zusammenhang mit der zeitdiskreten Optimierung. Insbesondere illustriert Fig. 8 verschiedene Zustände 200-204 in die für die verschiedenen Zeitintervalle 291-299 klassifiziert sein können. Dabei entspricht das Beispiel der Fig. 8 grundsätzlich dem Beispiel der Fig. 6. Jedoch ist in dem Beispiel der Fig. 8 ein weiterer Zustand 204 vorhanden, wobei der Zustand 204 als (iv) Regeneration bezeichnet werden kann. Bei der Regeneration kann die Randbedingung 250 so gewählt werden, dass ein Wiederherstellen der Leistungsreserve 251 in dem entsprechenden Zeitintervall 298 erfolgt, bevor ein erneutes Aktivieren des Leistungsaustausches 121 erfolgt (ein erneutes Aktivieren des Leistungsaustausches 121 ist in Fig. 8 nicht dargestellt). Wiederum wäre es möglich, dass eine entsprechende Zeitdauer 241 der Zeitintervalle 298, die für das Wiederherstellen der Leistungsreserve 251 im Anschluss an die Zeitintervalle 296-297 mit Zustand 203 vorgesehen sind, vorgegeben ist, zum Beispiel Unabhängigkeit von Vereinbarungen zwischen den Betreibern des Mikrostromnetzes 100 und dem Hauptstromnetz 120.

Durch das Vorsehen des Zustands 204 (iv) Regeneration kann ein übermäßiger Abbau der Leistungsreserve 251 vermieden werden. Eine weitere Strategie zur Vermeidung eines übermäßigen Abbaus der Leistungsreserve 251 kann auch durch Berücksichtigen einer positiven und/oder negativen Toleranz 260 im Zusammenhang mit dem Leistungsaustausch 121 erzielt werden (vergleiche Fig. 7 wo die entsprechenden Toleranzen in den Zeitintervallen 296, 297 im Zusammenhang mit dem Abbau der Leistungsreserve 251 illustriert sind). Diese Toleranzen 260 können sich beispielsweise auf einen vorgegebenen Wert für den Leistungsaustausch 121 beziehen.

Voranstehend wurde also das Konzept beschrieben, wonach durch Berücksichtigung verschiedener Zustände 200-204 der Leistungsaustausch 121 zwischen dem Mikrostromnetz 100 und dem Hauptstromnetz 120 berücksichtigt werden kann. Die Zielfunktion und/oder die Randbedingung der Optimierung kann entsprechend angepasst werden. Nachfolgend wird eine beispielhafte konkrete Implementierung einer solchen Anpassung der Randbedingung der Optimierung beschrieben, wobei die Optimierung als ganzzahlige lineare Optimierung durchgeführt wird. Dabei sollte aber verstanden werden, dass es grundsätzlich möglich ist, auch andere Techniken im Zusammenhang mit der Optimierung zu verwenden, wobei dann auch eine entsprechende Anpassung der Randbedingung an die anderen Techniken der Optimierung berücksichtigt werden kann.

Im nachfolgend beschriebenen Beispiel wird zunächst eine lineare Ungleichung beschrieben, um den Leistungsaustausch 121 zu modellieren. Dann wird gezeigt, dass diese Ungleichung in eine entsprechende Betriebsplanung eines Mikronetzes 100 integriert werden kann, wobei insbesondere berücksichtigt werden kann, dass a priori unbekannt ist, zu welchem konkreten Zeitpunkt ein Steuersignalen 310 den Leistungsaustausch 121 konkret angefragt wird. Nachfolgend wird dargelegt, welche Ungleichungen in einem ganzzahligen nichtlinearen Optimierungsmodell zur Steuerung eines Mikronetzes 100 mit einem Anschluss 110 an ein Hauptstromnetz 120 verwendet werden kann.

Dabei werden die folgenden Parameter für jedes Zeitintervall 291-299 $t_n$ berücksichtigt:

Mode($t_n$) : Wird aus den Inputdaten generiert und bestimmt, in welchem Zustand 200-204 sich das Mikronetz 100 bzgl. des Leistungsaustausches 121 zum Zeitintervall $t_n$ befindet, d.h.

$$Mode\,(t_n)\ \in \{AVAILABLE, UTILIZED, RESPONSE, RECOVERY, OFF\},$$

Dabei bezeichnet AVAILABLE den Zustand 201, UTILIZED den Zustand 203, RESPONSE den Zustand 202, RECOVERY den Zustand 204, sowie OFF den Zustand 200.

- R($t_n$): Tatsächlich angeforderte Leistung im Rahmen des Leistungsaustausches 121 zum Zeitintervall $t_n$. Positiv, wenn Leistungsabgabe zum Hauptstromnetz angefordert wird (Bus2Grid) oder negativ bei Leistungsannahme vom Hauptstromnetz (Grid2Bus).
- Max$^{Bus2Grid}$ ($t_n$), Max$^{Grid2Bus}$ ($t_n$): Maximale Kapazität des Hauptnetzanschlusses 110
- Dev$^{Up}$, Dev$^{Down}$: Grenzen für die erlaubte Abweichung von R($t_n$), d.h. Toleranz 260 (vgl. FIG. 7)

Variablen für jedes Zeitintervall $t_n$:

- $p^{Bus2Grid}$ ($t_n$) und $p^{Grid2Bus}$ ($t_n$) (stetig) : Leistungsabgabe/ - annahme am Hauptstromnetz
- $Grid2Bus(t_n)$ (binär): Indikatorvariable (1 für Leistungsannahme, 0 für Leistungsabgabe)

Randbedingungen für jedes Zeitintervall $t_n$:

$$(1)\qquad p^{Bus2Grid}(t_n) \leq \left(1 - Grid2Bus(t_n)\right) * R(t_n) * \left(1 + Dev^{Up}\right)$$

(Obere Schranke Leistungsabgabe)

$$(2) \qquad p^{Bus2Grid}(t_n) \geq \left(1 - Grid2Bus(t_n)\right) * R(t_n) * \left(1 + Dev^{Down}\right)$$

(Untere Schranke Leistungsabgabe)

$$(3) \qquad p^{Bus2Grid}(t_n) \leq Max^{Bus2Grid}(t_n)$$

(Obere Schranke Leistungsabgabe)

$$(4) \qquad p^{Grid2Bus}(t_n) \leq Grid2Bus(t_n) * \left(-R(t_n)\right) * \left(1 + Dev^{Up}\right)$$

(Obere Schranke Leistungsannahme)

$$(5) \qquad p^{Grid2Bus}(t_n) \geq Grid2Bus(t_n) * \left(-R(t_n)\right) * \left(1 + Dev^{Down}\right)$$

(Untere Schranke Leistungsannahme)

$$(6) \qquad p^{Grid2Bus}(t_n) \leq Max^{Bus2Grid}(t_n)$$

(Obere Schranke Leistungsannahme)

Falls ($R(t_n) < 0$)

$$(7.1) \quad Grid2Bus(t_n) = 1$$

Sonst

$$(7.2) \quad Grid2Bus(t_n) = 0$$

Zum Beispiel wäre es möglich, dass in der Zielfunktion der Optimierung entsprechende Umsätze oder Betriebskenngrößen, die durch das Verwenden des Leistungsaustausches 121 erzielt werden können, berücksichtigt werden. Dabei kann die Zielfunktion zum Beispiel unterscheiden, ob eine konkrete Aktivierung des Leistungsaustausches 121 durch ein entsprechendes Steuersignal 310 bzw. Zeitintervalle 296, 297 mit Zustand 203 vorliegt, oder aber die grundsätzliche Möglichkeit des Leistungsaustausches 121 in einem Standby Zustand 201. Neben solchen Termen in der Zielfunktion, die den Leistungsaustausch 121 betreffen, wäre es auch möglich, weitere oder andere Größen zu berücksichtigen.

Die Ungleichungen (1) - (7) der Randbedingungen der Optimierung im Zustand 203 können also die Steuerung des Mikronetzes 100 bei konkreter Aktivierung des Leistungsaustausches 121 modellieren. Diese Randbedingungen können in andere Optimierungen integriert werden, zum Beispiel in Techniken, wie sie in "Optimal Operational Planning for PV-Wind-Diesel-Battery Microgrid, G. G. Moshi, C. Bovo, and A. Berizzi, IEEE Eindhoven PowerTech, 2015" beschrieben sind.

Aus obenstehenden ist wiederum ersichtlich, dass bei der operativen Steuerung des Mikronetzes 100 nicht a priori bekannt ist, wann genau der Leistungsaustausch 121 mittels des Steuersignals 310 abgerufen wird; vielmehr kann (zum Beispiel zum Zeitpunkt 289, vergleiche Fig. 4) lediglich bekannt sein, in welchem potentiellen Zeitfenster (definiert durch die Zeitintervalle 293-298 im Zustand 201) und in welchem Umfang (gegebenenfalls unter Berücksichtigung der Toleranz 260) eine potentielle Teilnahme am Leistungsaustausch 121 vertraglich vereinbart wurde. Erst wenn der Betreiber des Hauptstromnetzes 120 das Steuersignal 310 zum Abrufen der Aktivierung des Leistungsaustausches 121 sendet, kann das Planungsgerät des Mikronetzes 100 endgültige Gewissheit darüber erlangen, dass Leistungen für den Leistungsaustausch 121 zur Verfügung gestellt oder aufgenommen werden muss (vergleiche Fig. 6, wo das Steuersignal 310 im Zusammenhang mit dem erneuten Durchführen der Optimierung zum Zeitpunkt 288 empfangen wird).

In typischen Verträgen zur Regelleistungsreserve kann dann spezifiziert werden, wie schnell das Mikrostromnetz 100 für die Aktivierung des Leistungsaustausches 121 bereit sein muss, d. h. wie schnell ein Teilnehmer bereit sein muss, nach erhaltenem Steuersignal 310 tatsächlich Leistung an das Hauptstromnetz 120 abzugeben oder aufzunehmen. Eine entsprechende vorgegebene Zeitdauer 240 (vergleiche Fig. 6) kann im Rahmen der Randbedingung als vorgegebene Zeitdauer für die Zeitintervalle 294, 295 im Zustand 202 berücksichtigt werden. Für die Integration in die prospektive Betriebsplanung des Mikrostromnetzes 100 ist es daher oftmals erstrebenswert, zunächst lediglich die Information über die Zeitfenster der potentiellen Teilnahme zu berücksichtigen, d. h. wie zum Beispiel im Zusammenhang mit Fig. 4 beschrieben, die Zeitintervalle 293-298 in den Standby-Zustand 201 zu klassifizieren. Die Information über die tatsächliche Aktivierung des Leistungsaustausches 121 kann dann in Abhängigkeit von dem Empfangen des Steuersignals 310 verfügbar gemacht werden und eine erneute Optimierung kann unter Berücksichtigung der abgerufenen Leistung für den Leistungsaustausch 121 am Anschluss 110 des Hauptstromnetzes 120 ausgelöst werden (vgl. Fig. 6, Optimierung zum Zeitpunkt 288). Das heißt, dass in Abhängigkeit von dem Empfangen des Steuersignals 310 eine neue Optimierung durchgeführt werden kann, wobei bestimmte Zeitintervalle 294-297 von Zustand 200 in den Zustand 202 und 203 bzw. auch in den Zustand 204 um klassifiziert werden können (vergleiche Fig. 6) .

Wie obenstehend beschrieben, kann ein Reservekonzept implementiert werden. Mittels des Reservekonzepts kann erreicht werden, dass das Mikronetz 100 in Zeitintervallen 293-298 mit Standby-Zustand 201 (d. h. grundsätzliches Anbieten des Leistungsaustausches 121), eine Leistungsreserve 251 aufbaut (vgl. Fig. 5). Dadurch kann eine Vorbereitung auf das tatsächliche Aktivieren des Leistungsaustausches 121 erreicht werden. Eine solche Leistungsreserve 251 für die Zeitintervalle 293-298 im Zustand 201 kann insbesondere in bestehende Leistungsreserve-Konzepte von herkömmlichen Optimierungen integriert werden. Dabei können Komponenten, die Energie bereitstellen, wie zum Beispiel eine Batterie oder ein laufender Dieselgenerator positiv zur Leistungsreserve 251 beitragen; während Leistung, die zum Beispiel an Verbraucher geliefert wird, ein gewisses Maß an negativer Leistungsreserve 251 benötigen kann. Im Zusammenhang mit der Leistungsreserve 251 kann auch eine gewisse Menge an Energie für den Leistungsaustausch 121 berücksichtigt werden. Derart kann sichergestellt werden, dass das Mikronetz 100 reagieren kann, falls der Leistungsaustausch mittels des Steuersignals 310 konkret aktiviert wird. Dabei kann es im Rahmen der Optimierung offenbleiben, ob eine Batterie aufgeladen wird oder ein Generator gestartet wird. Je nach Zielfunktion können unterschiedliche Strategien als Ergebnis der Optimierung erhalten werden und die Betriebsplanung entsprechend durchgeführt werden. Die in der Optimierung verwendete Randbedingung kann beispielsweise exemplarisch die folgende Form haben, wobei $OR^{req}(K)$, bzw. $OR^{del}(K)$ die benötigte, bzw. zur Verfügung gestellte Leistungsreserve eines Knotens 101-106 K beschreiben. Wie dies ausgestaltet ist, unterscheidet sich je nach Art der Komponente:

$$\sum_{Knoten\ K,die\ OR\ liefern} OR^{del}(K,t_n) - \sum_{Knoten\ K,die\ OR\ brauchen} OR^{req}(K,t_n) \geq 0$$

Um die Leistungsreserve 152 zu modellieren, kann $OR^{req}$ und $OR^{del}$ für den Hauptnetzanschluss 110 angepasst werden. Dies geschieht in Abhängigkeit des Zustandes $Mode(t_n) \in \{AVAILABLE,\ UTILIZED,\ RESPONSE\}$. Falls $OR^{req}(Netz,t_n) > 0$, ist entsprechend $OR^{del}(Netz,t_n) = 0$, das Hauptstromnetz 120 kann also zu diesen Zeitintervallen nicht benutzt werden, um anderweitige Schwankungen auszugleichen. Analog kann eine Ungleichung als mit der Leistungsreserve 251 assoziiert Randbedingungen der Optimierung aufgestellt werden, die sicherstellt, dass genügend Aufnahmekapazität für die Leistungsaufnahme vom Hauptnetzanschluss besteht.

Zusammenfassend wurden voranstehend Techniken geschrieben, um mittels einer Optimierung eine Betriebsplanung für ein Mikronetz durchzuführen. Dabei kann die Optimierung auf eine Zielfunktion und/oder ein oder mehrere Randbedingungen zurückgreifen, die in Abhängigkeit von einem Zustand, in dem ein oder mehrere jeweilige Zeitintervalle der zeitdiskreten Optimierung klassifiziert sind, angepasst werden. Ein Reservekonzept wurde beschrieben, bei welchen die Randbedingung insbesondere für Zeitintervalle, die in einen Zustand klassifiziert sind, der einen Standby vor dem konkreten Anfragen des Leistungsaustausches entspricht, aufgebaut wird. Diese Leistungsreserve kann dann in Zeitintervallen, in denen der Leistungsaustausch konkret aktiviert wurde, abgebaut werden.

Solche Techniken weisen insbesondere im Vergleich zur Referenzimplementierungen - etwa gemäß ″A MILP model for optimising multi-service portfolios of distributed energy storage, R. Moreno, R. Moreira, G. Strbac, Applied Energy 137, p. 554-566, 2015″ bestimmte Vorteile auf:
Einfachheit: mit dem hier beschriebenen Ansatz ist es möglich, die Abgabe/Aufnahme von Regelleistung leicht in bestehende und zukünftige Optimierungs-basierte Programme, insbesondere in Programme die eine lineare ganzzahlige Optimierung verwenden, zu integrieren. Ein mögliches Beispiel wäre zum Beispiel ″Optimal Operational Planning for PV-Wind-Diesel-Battery Microgrid, G. G. Moshi, C. Bovo, and A. Berizzi, IEEE Eindhoven PowerTech, 2015″. Eine rollierende optimierte Steuerung von Mikronetzen kann dadurch erzielt werden. Eine Anpassung an unterschiedliche Architekturen und Arten von Mikronetzen ist möglich.

Effizienzsteigerung: die Bereitschaft Regelleistung am Hauptnetzanschluss abzugeben bzw. aufzunehmen, ermöglicht es den Betreibern von Mikronetzen die Effizienz im Betrieb des Mikronetzes zu steigern. Das Hauptstromnetz kann stabilisiert werden. Leistungsspitzen können abgefedert werden. Eine Kooperation zwischen der Betriebsplanung des Hauptstromnetzes und des Mikronetzes ist möglich.

Flexibilität: mit den hierin beschriebenen Techniken können unterschiedliche Arten von Regelleistung mit unterschiedlichen Rahmenbedingungen umgesetzt werden. Zum Beispiel könnte es eine kurzfristige Leistungsreserve aber auch eine langfristige Leistungsreserve durch die beschriebenen Techniken implementiert werden.

Die hierin beschriebenen Techniken ergänzen Programme zur Betriebsplanung von Mikronetzen, die insbesondere auf ganzzahligen linearen Optimierungen beruhen. Die hierin beschriebenen Techniken sind für komplexe, jedoch laufzeitkritische Anwendungen mit Planungsoptimierung zur Laufzeit gut geeignet.

Dabei kann die Integration des Leistungsaustausches durch berücksichtigen der Erweiterung von herkömmlichen Randbedingungen und/oder Zielfunktionen besonders einfach und ohne erhöhte Komplexität möglich sein.

Flexibilität: mit den hierin beschriebenen Techniken kann man verschiedene Ansätze zum Leistungsaustausch mit ein und denselben Randbedingungen und/oder Zielfunktion modellieren. Dies wird gewährleistet durch eine allgemeine parametrisieren, wie obenstehend beschrieben. Insbesondere wird dies erreicht durch das berücksichtigen von unterschiedlichen Zuständen, in Abhängigkeit von denen die Zielfunktion und/oder ein oder mehrere Randbedingungen angepasst werden können. Derart kann insbesondere das Konzept einer Leistungsreserve abgebildet werden. Außerdem gibt es durch die Berücksichtigung der Zustände die Möglichkeit, bestimmte Toleranzen zu verwenden und derart Abweichungen bei der Bereitstellung des Leistungsaustausches zu erlauben.

Die Integration in ein bestehendes Leistungsreservekonzept kann möglich sein, d. h. es wäre möglich, dass die Randbedingung den Leistungsaustausch als positive Leistungsreserven für einen den Anschluss des Mikrostromnetzes an den Hauptstromnetz beschreibenden Knoten des Mikronetzes berücksichtigt. Außerdem kann eine differenzierte Bereitstellung von Informationen an ein Steuerungsgerät in Abhängigkeit von dem jeweiligen Zustand erfolgen.

## Patentansprüche

1. Verfahren zur prädiktiven Betriebsplanung in einem Mikronetz (100) mit Anschluss (110) an ein Hauptstromnetz (120), wobei das Verfahren umfasst:

    - Durchführen einer zeitdiskreten Optimierung einer Zielfunktion für ein Planungsintervall umfassend mehrere Zeitintervalle (291-299) und unter Berücksichtigung einer Randbedingung (250), wobei die Zielfunktion und/oder die Randbedingung (250) in Abhängigkeit von mehreren Systemzuständen (200-204) des Mikronetzes (100), gemäß denen die Zeitintervalle (291-299) klassifiziert sind, bestimmt ist, wobei die Systemzustände (200-204) ausgewählt sind aus folgender Gruppe (i) standby für Leistungsaustausch, (ii) Leistungsaustausch angefragt und (iii) aktiver Leistungsaustausch, und
    - Durchführen der Betriebsplanung basierend auf einem Ergebnis der Optimierung, wobei die Betriebsplanung einen Leistungsaustausch (121) zwischen dem Mikronetz (100) und dem Hauptstromnetz (120) über den Anschluss (110) vorsieht.

2. Verfahren nach Anspruch 1,
    wobei die Randbedingung (250) in Zeitintervallen (291-299) mit Systemzustand (i) standby für Leistungsaustausch einen Aufbau einer Leistungsreserve (251) für ein oder mehrere Knoten (101-106) des Mikronetzes (100) definiert.

3. Verfahren nach Anspruch 2,
    wobei die Randbedingung (250) in Zeitintervallen (291-299) mit Systemzustand (*iii*) aktiver Leistungsaustausch einen Abbau der Leistungsreserve (251) für das Durchführen des Leistungsaustausches (121) ermöglicht.

4. Verfahren nach einem der voranstehenden Ansprüche,

    wobei Zeitintervalle mit Systemzustand (*ii*) Leistungsaustausch angefragt folgen auf Zeitintervalle mit Systemzustand (*i*) standby für Leistungsaustausch,
    wobei Zeitintervalle mit Systemzustand (*iii*) aktiver Leistungsaustausch folgen auf Zeitintervalle mit Systemzustand (*ii*) Leistungsaustausch angefragt.

5. Verfahren nach einem der voranstehenden Ansprüche, wobei die Gruppe, aus der die Zustände ausgewählt sind, weiterhin umfasst: (*iv*) Regeneration,

    wobei Zeitintervalle (291-299) mit Systemzustand *(iv)* Regeneration folgen auf Zeitintervalle (291-299) mit Systemzustand *(iii)* aktiver Leistungsaustausch,
wobei die Randbedingung (250) in Zeitintervallen (291-299) mit Systemzustand *(iv)* Regeneration ein Wiederherstellen einer Leistungsreserve (251), die in Zeitintervallen (291-299) mit Systemzustand *(iii)* aktiver Leistungsaustausch abgebaut wurde, definiert.

6. Verfahren nach einem der voranstehenden Ansprüche, wobei das Verfahren weiterhin umfasst:

  - Empfangen eines Steuersignals (310), welches indikativ für einen angefragten Leistungsaustausch (121) ist, und
  - Auslösen des Durchführens der Optimierung in Abhängigkeit vom Steuersignal (310).

7. Verfahren nach Anspruch 6, das weiterhin umfasst:

  - vor dem Durchführen der Optimierung und in Abhängigkeit vom Steuersignal (310): Umklassifizieren von Zeitintervallen (294, 295) mit Systemzustand *(i)* standby für Leistungsaustausch zu Zeitintervallen (291-299) mit Systemzustand *(ii)* Leistungsaustausch angefragt.

8. Verfahren nach einem der voranstehenden Ansprüche,
wobei die Randbedingung (250) in Zeitintervallen (291-299) mit Systemzustand *(iii)* aktiver Leistungsaustausch einen vorgegebenen Wert für den Leistungsaustausch (121) berücksichtigt.

9. Verfahren nach Anspruch 8,
wobei die Randbedingung (250) in Zeitintervallen (291-299) mit Systemzustand *(iii)* aktiver Leistungsaustausch eine positive Toleranz und/oder negative Toleranz (260) für den vorgegebenen Wert berücksichtigt.

10. Verfahren nach einem der voranstehenden Ansprüche, wobei die Randbedingung (250) den Leistungsaustausch (121) als positive Leistungsreserve (251) für einen den Anschluss (110) beschreibenden Knoten des Mikronetzes (100) in Zeitintervallen (291-299) mit Systemzustand *(iii)* aktiver Leistungsaustausch berücksichtigt.

11. Verfahren nach einem der voranstehenden Ansprüche,
wobei die Randbedingung (250) eine vorgegebene Zeitdauer (240) für die Zeitintervalle (291-299) mit Systemzustand *(ii)* Leistungsaustausch angefragt berücksichtigt.

12. Verfahren nach einem der voranstehenden Ansprüche,
wobei die Optimierung als ganzzahlige lineare Optimierung durchgeführt wird.

13. Gerät (500), das eingerichtet ist zur prädiktiven Betriebsplanung in einem Mikronetz (100) mit Anschluss (110) an ein Hauptstromnetz (120), wobei das Gerät (500) eingerichtet ist, um die folgenden Schritte auszuführen:

  - Durchführen einer zeitdiskreten Optimierung einer Zielfunktion für ein Planungsintervall umfassend mehrere Zeitintervalle (291-299) und unter Berücksichtigung einer Randbedingung (250), wobei die Zielfunktion und/oder die Randbedingung (250) in Abhängigkeit von mehreren Systemzuständen (200-204) des Mikronetzes (100), gemäß denen die Zeitintervalle (291-299) klassifiziert sind, bestimmt ist, wobei die Systemzustände ausgewählt sind aus folgender Gruppe (i) standby für Leistungsaustausch, *(ii)* Leistungsaustausch angefragt und *(iii)* aktiver Leistungsaustausch, und
  - Durchführen der Betriebsplanung basierend auf einem Ergebnis der Optimierung, wobei die Betriebsplanung einen Leistungsaustausch (121) zwischen dem Mikronetz (100) und dem Hauptstromnetz (120) über den Anschluss (110) vorsieht.

14. Gerät (500) nach Anspruch 13,
wobei das Gerät (500) eingerichtet ist, um das Verfahren nach einem der Ansprüche 2 bis 12 durchzuführen.


**Claims**

1. Method for predictive operational planning in a microgrid (100) with a connection (110) to a primary grid (120), wherein the method comprises:

- performing a discrete-time optimization of a target function for a planning interval comprising multiple time intervals (291-299) and by taking into consideration a constraint (250), wherein the target function and/or the constraint (250) is determined on the basis of multiple system states (200-204) of the microgrid (100) according to which the time intervals (291-299) are classified, wherein the system states (200-204) are selected from the following group: (*i*) standby for power exchange, (*ii*) power exchange requested and (*iii*) active power exchange, and

- performing the operational planning on the basis of a result of the optimization, wherein the operational planning provides for a power exchange (121) between the microgrid (100) and the primary grid (120) via the connection (110).

2. Method according to Claim 1,
wherein the constraint (250) in time intervals (291-299) with system state (*i*) standby for power exchange defines a buildup of a power reserve (251) for one or more nodes (101-106) of the microgrid (100).

3. Method according to Claim 2,
wherein the constraint (250) in time intervals (291-299) with system state (*iii*) active power exchange allows a reduction of the power reserve (251) for performing the power exchange (121).

4. Method according to one of the preceding claims,

wherein time intervals with system state (*ii*) power exchange requested follow time intervals with system state (*i*) standby for power exchange,
wherein time intervals with system state (*iii*) active power exchange follow time intervals with system state (*ii*) power exchange requested.

5. Method according to one of the preceding claims, wherein the group from which the states are selected furthermore comprises: (*iv*) regeneration,

wherein time intervals (291-299) with system state (*iv*) regeneration follow time intervals (291-299) with system state (*iii*) active power exchange,
wherein the constraint (250) in time intervals (291-299) with system state (*iv*) regeneration defines a restoration of a power reserve (251) that was reduced in time intervals (291-299) with system state (*iii*) active power exchange.

6. Method according to one of the preceding claims, wherein the method furthermore comprises:

- receiving a control signal (310) indicative of a requested power exchange (121), and
- triggering performance of the optimization on the basis of the control signal (310).

7. Method according to Claim 6, furthermore comprising:

- prior to performance of the optimization and on the basis of the control signal (310): reclassifying time intervals (294, 295) with system state (*i*) standby for power exchange as time intervals (291-299) with system state (*ii*) power exchange requested.

8. Method according to one of the preceding claims,
wherein the constraint (250) in time intervals (291-299) with system state (*iii*) active power exchange takes into consideration a prescribed value for the power exchange (121).

9. Method according to Claim 8,
wherein the constraint (250) in time intervals (291-299) with system state (*iii*) active power exchange takes into consideration a positive tolerance and/or negative tolerance (260) for the prescribed value.

10. Method according to one of the preceding claims,
wherein the constraint (250) takes into consideration the power exchange (121) as a positive power reserve (251) for a node of the microgrid (100) that describes the connection (110) in time intervals (291-299) with system state (*iii*) active power exchange.

**11.** Method according to one of the preceding claims,
wherein the constraint (250) takes into consideration a prescribed length of time (240) for the time intervals (291-299) with system state (*ii*) power exchange requested.

**12.** Method according to one of the preceding claims,
wherein the optimization is performed as integer linear optimization.

**13.** Device (500) configured for predictive operational planning in a microgrid (100) with a connection (110) to a primary grid (120), wherein the device (500) is configured to carry out the following steps:

- performing a discrete-time optimization of a target function for a planning interval comprising multiple time intervals (291-299) and by taking into consideration a constraint (250), wherein the target function and/or the constraint (250) is determined on the basis of multiple system states (200-204) of the microgrid (100) according to which the time intervals (291-299) are classified, wherein the system states are selected from the following group: (*i*) standby for power exchange, (*ii*) power exchange requested and (*iii*) active power exchange, and
- performing the operational planning on the basis of a result of the optimization, wherein the operational planning provides for a power exchange (121) between the microgrid (100) and the primary grid (120) via the connection (110).

**14.** Device (500) according to Claim 13,
wherein the device (500) is configured to perform the method according to one of Claims 2 to 12.

**Revendications**

**1.** Procédé pour la planification de fonctionnement prédictive dans un micro-réseau (100) avec une connexion (110) à un réseau électrique principal (120), le procédé comprenant :

- la mise en œuvre d'une optimisation discrète dans le temps d'une fonction cible pour un intervalle de planification comprenant plusieurs intervalles de temps (291 à 299) et avec prise en compte d'une condition marginale (250), la fonction cible et/ou la condition marginale (250) étant déterminées en fonction de plusieurs états de système (200 à 204) du micro-réseau (100) selon lesquels sont classifiés les intervalles de temps (291 à 299), les états de système (200 à 204) étant sélectionnés dans le groupe suivant (*i*) veille pour l'échange de puissance, (*ii*) échange de puissance sollicité et (iii) échange de puissance actif, et
- la mise en œuvre de la planification de fonctionnement sur la base d'un résultat de l'optimisation, la planification de fonctionnement prévoyant un échange de puissance (121) entre le micro-réseau (100) et le réseau électrique principal (120) par l'intermédiaire de la connexion (110).

**2.** Procédé selon la revendication 1,
dans lequel la condition marginale (250), dans des intervalles de temps (291 à 299) avec l'état de système (*i*) veille pour l'échange de puissance, définit une constitution d'une réserve de puissance (251) pour un ou plusieurs nœuds (101 à 106) du micro-réseau (100).

**3.** Procédé selon la revendication 2,
dans lequel la condition marginale (250), dans des intervalles de temps (291 à 299) avec l'état de système (*iii*) échange de puissance actif, permet une réduction de la réserve de puissance (251) pour la mise en œuvre de l'échange de puissance (121).

**4.** Procédé selon l'une des revendications précédentes,

dans lequel des intervalles de temps avec l'état de système (*ii*) échange de puissance sollicité font suite à des intervalles de temps avec l'état de système (*i*) veille pour l'échange de puissance,
dans lequel des intervalles de temps avec l'état de système (*iii*) échange de puissance actif font suite à des intervalles de temps avec l'état de système (*ii*) échange de puissance sollicité.

**5.** Procédé selon l'une des revendications précédentes,

dans lequel le groupe dans lequel sont sélectionnés les états comprend en outre : (*iv*) régénération,

dans lequel des intervalles de temps (291 à 299) avec l'état de système *(iv)* régénération font suite à des intervalles de temps (291 à 299) avec l'état de système *(iii)* échange de puissance actif,

dans lequel la condition marginale (250), dans des intervalles de temps (291 à 299) avec l'état de système *(iv)* régénération, définit une restauration d'une réserve de puissance (251) qui, dans des intervalles de temps (291 à 299) avec l'état de système *(iii)* échange de puissance actif, a été réduite.

6. Procédé selon l'une des revendications précédentes, le procédé comprenant en outre :

- réception d'un signal de commande (310), lequel indique un échange de puissance (121) sollicité, et
- déclenchement de la mise en œuvre de l'optimisation en fonction du signal de commande (310).

7. Procédé selon la revendication 6, qui comprend en outre :

- avant la mise en œuvre de l'optimisation et en fonction du signal de commande (310) : reclassification d'intervalles de temps (294, 295) avec l'état de système (i) veille pour l'échange de puissance en intervalles de temps (291 à 299) avec l'état de système *(ii)* échange de puissance sollicité.

8. Procédé selon l'une des revendications précédentes,
dans lequel la condition marginale (250), dans des intervalles de temps (291 à 299) avec l'état de système *(iii)* échange de puissance actif, prend en compte une valeur prédéfinie pour l'échange de puissance (121).

9. Procédé selon la revendication 8,
dans lequel la condition marginale (250), dans des intervalles de temps (291 à 299) avec l'état de système *(iii)* échange de puissance actif, prend en compte une tolérance positive et/ou tolérance négative (260) pour la valeur prédéfinie.

10. Procédé selon l'une des revendications précédentes,
dans lequel la condition marginale (250) prend en compte l'échange de puissance (121) en tant que réserve de puissance (251) positive pour un nœud du micro-réseau (100) décrivant la connexion (110) dans des intervalles de temps (291 à 299) avec l'état de système *(iii)* échange de puissance actif.

11. Procédé selon l'une des revendications précédentes,
dans lequel la condition marginale (250) prend en compte une période prédéfinie (240) pour les intervalles de temps (291 à 299) avec l'état de système *(ii)* échange de puissance sollicité.

12. Procédé selon l'une des revendications précédentes,
dans lequel l'optimisation est mise en œuvre en tant qu'optimisation linéaire en nombres entiers.

13. Appareil (500), qui est conçu pour la planification de fonctionnement prédictive dans un micro-réseau (100) avec une connexion (110) à un réseau électrique principal (120), l'appareil (500) étant conçu pour exécuter les étapes suivantes :

- la mise en œuvre d'une optimisation discrète dans le temps d'une fonction cible pour un intervalle de planification comprenant plusieurs intervalles de temps (291 à 299) et avec prise en compte d'une condition marginale (250), la fonction cible et/ou la condition marginale (250) étant déterminées en fonction de plusieurs états de système (200 à 204) du micro-réseau (100) selon lesquels sont classifiés les intervalles de temps (291 à 299), les états de système étant sélectionnés dans le groupe suivant (i) veille pour l'échange de puissance, (ii) échange de puissance sollicité et (iii) échange de puissance actif, et
- la mise en œuvre de la planification de fonctionnement sur la base d'un résultat de l'optimisation, la planification de fonctionnement prévoyant un échange de puissance (121) entre le micro-réseau (100) et le réseau électrique principal (120) par l'intermédiaire de la connexion (110).

14. Appareil (500) selon la revendication 13,
l'appareil (500) étant conçu pour mettre en œuvre le procédé selon l'une des revendications 2 à 12.

## FIG 1

## FIG 2

# FIG 3

# FIG 4

# FIG 5

FIG 6

FIG 7

# FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018173171 A
- DE 102015206510 A1

- US 2015039145 A1

**In der Beschreibung aufgeführte Nicht-Patentliteratur**

- Optimal operational planning for PV-Wind-Diesel-battery microgrid. **MOSHI GODFREY GLADSON et al.** IEEE EINDHOVEN POWERTECH. IEEE, 29. Juni 2015
- Multi-agent based distributed control architecture for microgrid energy management and optimization. **BASIR KHAN M REYASUDIN et al.** ENERGY CONVERSION AND MANAGEMENT. ELSEVIER SCIENCE PUBLISHERS, 25. Januar 2016, vol. 112

- **G. G. MOSHI ; C. BOVO ; A. BERIZZI.** Optimal Operational Planning for PV-Wind-Diesel-Battery Microgrid. *IEEE Eindhoven PowerTech,* 2015
- **R. MORENO ; R. MOREIRA ; G. STRBAC.** A MILP model for optimising multi-service portfolios of distributed energy storage. *Applied Energy,* 2015, vol. 137, 554-566